# EUROPEAN PATENT SPECIFICATION

(11) **EP 4 276 935 B1**
(45) Date of publication and mention of the grant of the patent: **16.10.2024**
(21) Application number: 23169803.6
(22) Date of filing: 25.04.2023
(51) Int. Cl.: H01M 4/131, H01M 4/36, C01G 53/00, H01M 4/525, H01M 4/62, H01M 4/02

(54) **NONAQUEOUS ELECTROLYTE SECONDARY BATTERY**
SEKUNDÄRBATTERIE MIT NICHTWÄSSRIGEM ELEKTROLYTEN
BATTERIE SECONDAIRE À ÉLECTROLYTE NON AQUEUX

(30) Priority: 11.05.2022 JP 2022078370
(43) Date of publication of application: 15.11.2023
(73) Proprietor: Prime Planet Energy & Solutions, Inc., Chuo-ku Tokyo 103-0022 (JP)
(72) Inventor: SUZUKI, Shinya, Tokyo, 103-0022 (JP); TSUJIKO, Akira, Tokyo, 103-0022 (JP)
(74) Representative: Kuhnen & Wacker Patent- und Rechtsanwaltsbüro PartG mbB

(56) References cited:
- WO-A1-2012/124015
- US-A1- 2017 149 049
- US-A1- 2019 190 018

## Description

### BACKGROUND OF THE DISCLOSURE

### 1. Field

The present disclosure relates to a nonaqueous electrolyte secondary battery.

### 2. Background

A positive electrode of a nonaqueous electrolyte secondary battery generally includes a lithium complex oxide as a positive electrode active material (for example, see Japanese Patent Application Publication No. 2015-22950 and Japanese Patent Application Publication No. 2010-153403). For example, Japanese Patent Application Publication No. 2015-22950 discloses, as a positive electrode active material, a lithium-nickel-cobalt-manganese complex oxide containing 30 to 60 mol% of nickel (Ni) relative to the total of metal elements other than lithium.

### SUMMARY

The nonaqueous electrolyte secondary battery has been required to have higher performance along with its widespread use. In view of this, from the viewpoints of improving energy density and the like, it has recently been examined to use a lithium complex oxide containing Ni as high as 70 mol% or more as the positive electrode active material. According to examinations by the present inventors, however, using the lithium complex oxide with such a high Ni content (hereinafter also referred to as "high Ni content lithium complex oxide") has resulted in a problem that gas is easily generated when the battery is preserved under high voltage compared to using a conventional lithium complex oxide with a low Ni content.

The present disclosure has been made in view of the above circumstances and a main object of the present disclosure is to provide a nonaqueous electrolyte secondary battery that includes a Ni content lithium complex oxide with a high Ni content in a positive electrode and that generates less gas at high energy density and under high voltage.

As a result of various examinations by the present inventors about the reason why a larger quantity of gas is generated in a case of using the Ni content lithium complex oxide with the high Ni content, the following is considered, although the reason is not limited in particular. That is to say, when a positive electrode is pressed with high pressure in order to increase the energy density or the positive electrode expands as being charged or discharged, a large burden applies particularly to a positive electrode active material existing on a front surface side (upper layer part) of the positive electrode. This results in a crack due to pressing in the positive electrode active material in that part. Accordingly, a surface of a particle is newly exposed at the place that is cracked due to the pressing and a side reaction with a nonaqueous electrolyte occurs. This is the reason why a large quantity of gas is generated under high voltage in particular. In view of this, the present disclosure has been made.

The present disclosure provides a nonaqueous electrolyte secondary battery including a positive electrode, a negative electrode, and a nonaqueous electrolyte, in which the positive electrode includes a positive electrode current collector and a positive electrode active material layer supported by the positive electrode current collector, and the positive electrode active material layer has a multilayer structure including a positive electrode lower layer, and a positive electrode upper layer disposed at a position farther from the positive electrode current collector than the positive electrode lower layer. The positive electrode lower layer includes a first positive electrode active material including a first Ni content lithium complex oxide containing 70 mol% or more of nickel relative to metal elements other than lithium. The first Ni content lithium complex oxide has a porosity of less than 2%. The positive electrode upper layer includes a second positive electrode active material including a second Ni content lithium complex oxide containing 70 mol% or more of nickel relative to metal elements other than lithium, and a covering element including at least one kind of element among elements that belong to Group 6 or Group 13 and attached to the second Ni content lithium complex oxide. The second Ni content lithium complex oxide is a secondary particle in which primary particles are aggregated, the second Ni content lithium complex oxide has a porosity of 2% or more and 20% or less, in the second Ni content lithium complex oxide, a larger space than an average cross-sectional area of the primary particles does not exist inside the secondary particle in a cross-sectional observation image observed with an electron microscope, and the covering element is contained by 0.5 mol% or more and 3 mol% or less when a total of metal elements of the second Ni content lithium complex oxide is 100 mol%.

With such a structure, the nonaqueous electrolyte secondary battery in which the generation of gas at high energy density and under high voltage is suppressed can be achieved. Specifically, when the first positive electrode active material including the relatively dense Ni content lithium complex oxide including the secondary particle with a porosity of less than 2% is disposed in the positive electrode lower layer with small stress burden, the high energy density can be achieved. In addition, in the positive electrode upper layer with large stress burden, the porosity of the Ni lithium complex oxide is made larger than that of the positive electrode lower layer and the space in the secondary particle is made smaller than the average cross-sectional area of the primary particles; thus, the suitable space can be secured inside the secondary particle. Accordingly, in the positive electrode upper layer, the covering element can be spread evenly in the secondary particle and the surface of the primary particle can be coated with the covering element in advance. As a result, even if the second positive electrode active material is cracked due to pressing, the side reaction with the nonaqueous electrolyte can be suppressed and the quantity of gas to be generated under high voltage can be reduced.

In a preferred aspect of the nonaqueous electrolyte secondary battery disclosed herein, the covering element is boron. Thus, the side reaction with the nonaqueous electrolyte can be suppressed at a higher level and the quantity of gas to be generated under high voltage can be reduced further.

In a preferred aspect of the nonaqueous electrolyte secondary battery disclosed herein, the covering element exists on a surface of the primary particle inside the secondary particle. Thus, the reaction of the nonaqueous electrolyte on the surface of the primary particle can be suppressed at the higher level and the quantity of gas to be generated under high voltage can be reduced further.

In a preferred aspect of the nonaqueous electrolyte secondary battery disclosed herein, a ratio of a thickness of the positive electrode upper layer to an entire thickness of the positive electrode active material layer is 0.1 or more and 0.5 or less. Thus, both the high energy density and the suppression of the gas generation under high voltage can be achieved at the high level.

In a preferred aspect of the nonaqueous electrolyte secondary battery disclosed herein, at least one of the first Ni content lithium complex oxide and the second Ni content lithium complex oxide is a lithium-nickel-cobalt-manganese complex oxide. Thus, the internal resistance can be reduced and a battery characteristic (for example, cycle characteristic or output characteristic) can be improved.

The above and other elements, features, steps, characteristics and advantages of the present disclosure will become more apparent from the following detailed description of the preferred embodiments with reference to the attached drawings.

### BRIEF DESCRIPTION OF THE DRAWINGS

FIG. 1 is a cross-sectional view schematically illustrating an internal structure of a nonaqueous electrolyte secondary battery according to an embodiment;
FIG. 2 is a cross-sectional view schematically illustrating a structure of a positive electrode sheet according to an embodiment; and
FIG. 3A is a cross-sectional view schematically illustrating a first positive electrode active material according to an embodiment, and FIG. 3B is a cross-sectional view schematically illustrating a second positive electrode active material according to an embodiment.

### DETAILED DESCRIPTION OF THE PREFERRED EMBODIMENTS

Preferred embodiments of the present disclosure will be described below with reference to the drawings as appropriate. Matters other than matters particularly mentioned in the present specification and necessary for the implementation of the present disclosure (for example, the general configuration and manufacturing process of a nonaqueous electrolyte secondary battery that do not characterize the present disclosure) can be grasped as design matters of those skilled in the art based on the prior art in the relevant field. The present disclosure can be implemented on the basis of the contents of the present specification and common technical knowledge in the relevant field.

Note that in the drawings below, the members and parts with the same operation are denoted by the same reference signs and the overlapping description may be omitted or simplified. Moreover, the term "secondary battery" in this specification refers to a power storage device that can be charged and discharged repeatedly, and is to encompass a power storage element such as a so-called storage battery and an electric double-layer capacitor. Note that, in the present specification, the term "lithium ion secondary battery" refers to a general secondary battery that uses lithium ions as a charge carrier and can be charged and discharged by transfer of charges with the lithium ions between positive and negative electrodes. In the present specification, the notation "X to Y" for a range signifies a value more than or equal to X and less than or equal to Y, and is meant to encompass also the meaning of being "preferably more than X" and "preferably less than Y".

### [Nonaqueous electrolyte secondary battery]

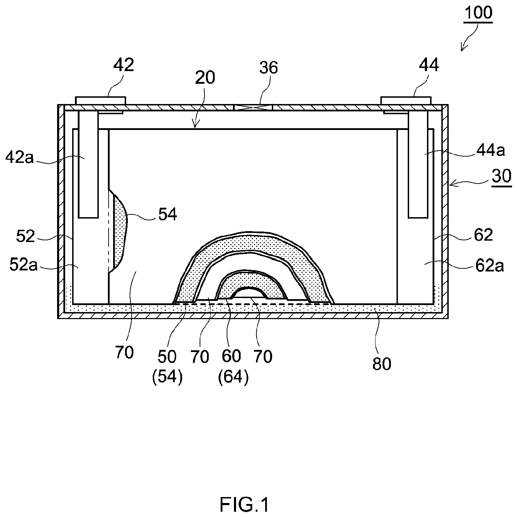

FIG. 1 is a cross-sectional view schematically illustrating an internal structure of a nonaqueous electrolyte secondary battery 100 according to one embodiment. The nonaqueous electrolyte secondary battery 100 illustrated in FIG. 1 is a prismatic battery in which a flat electrode body 20 and a nonaqueous electrolyte 80 are housed and sealed within a flat and rectangular battery case 30. The nonaqueous electrolyte secondary battery 100 is characterized by including a positive electrode sheet 50 to be described below, and except that, may have a structure similar to the conventional one. Moreover, the nonaqueous electrolyte secondary battery may be a coin type, a button type, a cylindrical type, a laminate case type, or the like in another embodiment.

The battery case 30 is an exterior container for housing the electrode body 20 and the nonaqueous electrolyte 80. As the material of the battery case 30, for example, a metal material with small weight and high thermal conductivity, such as aluminum, is used. On an outer surface of the battery case 30, a positive electrode terminal 42 and a negative electrode terminal 44 for external connection, and a thin safe valve 36 that is set to, when the internal pressure of the battery case 30 has risen to or above a predetermined level, release the internal pressure are provided. The positive electrode terminal 42 is electrically connected to a positive electrode current collection plate 42a, and the negative electrode terminal 44 is electrically connected to a negative electrode current collection plate 44a.

Here, the electrode body 20 is a wound electrode body in which the positive electrode sheet 50 with a band shape and a negative electrode sheet 60 with a band shape are overlapped on each other across two separator sheets 70 with a band shape and wound in a longitudinal direction. In another embodiment, however, the electrode body may be a stack type electrode body formed in a manner that a rectangular positive electrode and a rectangular negative electrode are stacked across a rectangular separator. The positive electrode sheet 50 has a structure in which a positive electrode active material layer 54 is formed along the longitudinal direction on one surface or both surfaces (here, both surfaces) of a positive electrode current collector 52 with a band shape as illustrated in a partially ruptured view of FIG. 1. Note that the positive electrode sheet 50 will be described in detail below. The negative electrode sheet 60 has a structure in which a negative electrode active material layer 64 is formed along the longitudinal direction on one surface or both surfaces (here, both surfaces) of a negative electrode current collector 62 with a band shape.

At both ends of the electrode body 20 in a winding axis direction (that is, a width direction orthogonal to the longitudinal direction), a positive electrode active material layer non-formation part 52a where the positive electrode active material layer 54 is not formed and the positive electrode current collector 52 is exposed and a negative electrode active material layer non-formation part 62a where the negative electrode active material layer 64 is not formed and the negative electrode current collector 62 is exposed are formed in a manner of protruding outward. Each of the positive electrode active material layer non-formation part 52a and the negative electrode active material layer non-formation part 62a functions as a current collection part. The positive electrode active material layer non-formation part 52a and the negative electrode active material layer non-formation part 62a include the positive electrode current collection plate 42a and the negative electrode current collection plate 44a, respectively. Note that the shape of the positive electrode active material layer non-formation part 52a and the negative electrode active material layer non-formation part 62a is not limited to the shape illustrated in the drawing. Each of the positive electrode active material layer non-formation part 52a and the negative electrode active material layer non-formation part 62a may be formed as a current collection tab that is processed into a predetermined shape.

The negative electrode current collector 62 is preferably made of metal, and more preferably made of a metal foil. The negative electrode current collector 62 is a copper foil here. The negative electrode active material layer 64 includes a negative electrode active material. As the negative electrode active material, for example, a carbon material such as graphite, hard carbon, or soft carbon can be used. The negative electrode active material layer 64 may include an additive component other than the negative electrode active material. Examples of the additive component include a binder, a thickener, and the like. Examples of the binder include rubbers such as styrene butadiene rubber (SBR) and fluorine resins such as polyvinylidene fluoride (PVDF). Examples of the thickener include celluloses such as carboxymethyl cellulose (CMC).

The separator sheet 70 may be, for example, a porous sheet (film) made of resin such as polyethylene (PE), polypropylene (PP), or polyester. Such a porous sheet may have a single-layer structure or a multilayer structure of two or more layers (for example, three-layer structure in which a PP layer is stacked on each surface of a PE layer). The separator sheet 70 may have a heat-resistant layer (HRL) on a surface thereof.

The nonaqueous electrolyte 80 is typically a nonaqueous electrolyte solution containing a nonaqueous solvent and a supporting salt (electrolyte salt). In another embodiment, however, the nonaqueous electrolyte 80 may be a polymer electrolyte. As the nonaqueous solvent, any of various kinds of organic solvents including carbonates, ethers, esters, and the like that are usable for electrolyte solutions of general nonaqueous electrolyte secondary batteries can be used alone or two or more kinds thereof can be used as appropriate in combination. Specific examples include ethylene carbonate (EC), propylene carbonate (PC), diethyl carbonate (DEC), dimethyl carbonate (DMC), ethyl methyl carbonate (EMC), and the like. Examples of the supporting salt include lithium salts such as LiPF₆ and LiBF₄.

### [Positive electrode]

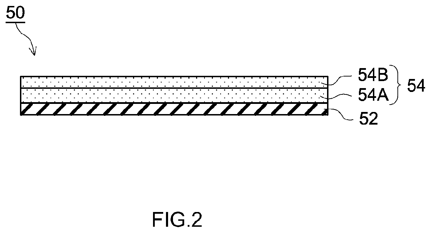

FIG. 2 is a cross-sectional view schematically illustrating a structure of the positive electrode sheet 50 according to an embodiment. The positive electrode sheet 50 includes the positive electrode current collector 52, and the positive electrode active material layer 54 supported by the positive electrode current collector 52. Although FIG. 2 illustrates the positive electrode active material layer 54 on only one surface of the positive electrode current collector 52, the positive electrode active material layer 54 may be provided on each of both surfaces. The positive electrode active material layer 54 has a multilayer structure including a positive electrode lower layer 54A existing on a side closer to the positive electrode current collector 52 and a positive electrode upper layer 54B existing on a side farther from the positive electrode current collector 52 than the positive electrode lower layer 54A (in other words, on a front surface side of the positive electrode sheet 50). The positive electrode active material layer 54 has a two-layer structure here, and the positive electrode lower layer 54A is provided on a surface of the positive electrode current collector 52 and the positive electrode upper layer 54B is provided on a surface of the positive electrode lower layer 54A. The positive electrode upper layer 54B forms the outermost surface. In another embodiment, however, a third layer may be provided between the positive electrode current collector 52 and the positive electrode lower layer 54A and a fourth layer may be provided between the positive electrode lower layer 54A and the positive electrode upper layer 54B, for example.

The positive electrode current collector 52 is preferably made of metal, and more preferably made of a metal foil such as an aluminum, nickel, titanium, or stainless steel foil. The positive electrode current collector 52 is an aluminum foil here. The thickness of the positive electrode current collector 52 is for example 5 to 35 µm and preferably 7 to 20 µm.

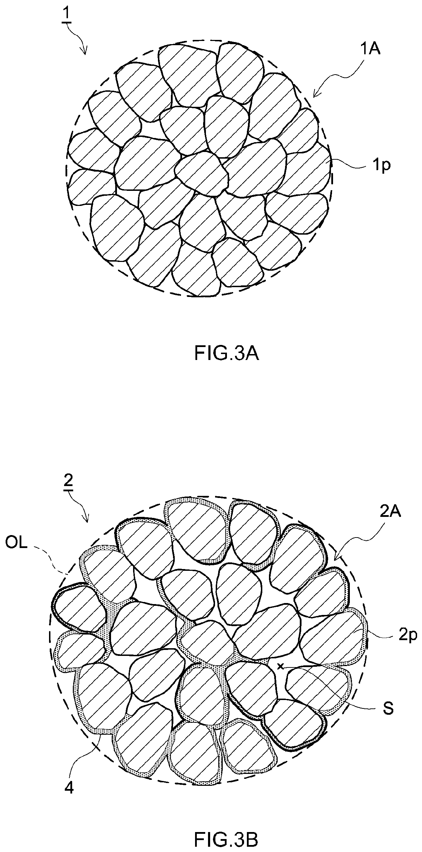

The positive electrode lower layer 54A includes at least a first positive electrode active material 1 (see FIG. 3A). FIG. 3A is a cross-sectional view schematically illustrating the first positive electrode active material 1 according to an embodiment. The first positive electrode active material 1 contains a first high Ni content lithium complex oxide 1A (hereinafter also referred to as "high Ni content lithium complex oxide 1A" simply). The first high Ni content lithium complex oxide 1A is one example of lithium complex oxides containing 70 mol% or more of Ni disclosed herein. The first positive electrode active material 1 includes the high Ni content lithium complex oxide 1A here. However, a covering element or the like may be further contained in a manner similar to, for example, a second high Ni content lithium complex oxide 2A to be described below, within the range not interrupting the effect of the art disclosed herein. For example, the covering element or the like may be further contained in a smaller quantity than in the second high Ni content lithium complex oxide 2A. Note that FIG. 3A illustrates one example and the first positive electrode active material 1 is not limited to the illustrated example. For example, the high Ni content lithium complex oxide 1A here has a substantially spherical shape; however, the shape may be irregular, for example. Note that, in the present specification, the term "substantially spherical shape" means a shape that can be regarded as being generally spherical as a whole and that has an average aspect ratio (major axis/minor axis ratio) of generally 1 to 2 and for example 1 to 1.5 in a cross-sectional observation image with an electron microscope.

The high Ni content lithium complex oxide 1A is a compound containing Ni as a necessary element, and containing 70 mol% or more of Ni relative to the total of the metal elements other than lithium from the viewpoint of improving the energy density of a battery. The Ni content is preferably 75 mol% or more, and for example 80 mol% or more. Specific examples include lithium-nickel complex oxides, lithium-nickel-cobalt complex oxides, lithium-nickel-manganese complex oxides, lithium-nickel-cobalt-manganese complex oxides, lithium-nickel-cobalt-aluminum complex oxides, lithium-iron-nickel-manganese complex oxides, and the like. Any of these may be used alone or two or more kinds may be used in combination. It is preferable that the high Ni content lithium complex oxide 1A further contains at least one kind of Co and Mn in addition to Ni. Among these, a lithium-nickel-cobalt-manganese complex oxide containing Ni, Co, and Mn is preferable for its excellent battery characteristics including low initial resistance and the like.

Note that, in the present specification, the term "lithium-nickel-cobalt-manganese complex oxide" encompasses oxides containing Li, Ni, Co, Mn, and O as constituent elements and moreover oxides containing one kind or two or more kinds of additive elements other than those above. Examples of such additive elements include transition metal elements, typical metal elements, and the like including Mg, Ba, Sr, Ca, Al, Ti, V, Cr, Y, Zr, Nb, Mo, Hf, Ta, W, Na, K, Fe, Cu, Zn, Sn, and the like. The additive element may be a metalloid element such as B, C, Si, or P or a non-metallic element such as S, F, Cl, Br, or I. This similarly applies to the lithium-nickel complex oxides, the lithium-nickel-cobalt complex oxides, the lithium-nickel-manganese complex oxides, the lithium-nickel-cobalt-aluminum complex oxides, the lithium-iron-nickel-manganese complex oxides, and the like described above.

The lithium-nickel-cobalt-manganese complex oxide preferably has a composition expressed by the following Formula (I):

Li₁₊ₓNi_{y}Co_{z}Mn_{(1-y-z)}M_{α}O_{2-β}Q_{β} (I)

In the above Formula (I), x, y, z, α, and β satisfy -0.3 ≤ x ≤ 0.3, 0.7 ≤ y ≤ 0.95, 0.02 ≤ z ≤ 0.28, 0 ≤ α ≤ 0.1, and 0 ≤ β ≤ 0.5, respectively, M represents at least one kind of element selected from the group consisting of Al, Zr, B, Mg, Fe, Cu, Zn, Sn, Na, K, Ba, Sr, Ca, W, Mo, Nb, Ti, and Si, and Q represents at least one kind of element selected from the group consisting of F, Cl, and Br.

Note that x satisfies preferably 0 ≤ x ≤ 0.3, more preferably 0 ≤ x ≤ 0.15, and is still more preferably 0. From the viewpoint of balancing the battery characteristics (for example, energy density, cycle characteristic, and output characteristic), y satisfies preferably 0.75 ≤ y ≤0.95 and for example 0.8 ≤ y ≤ 0.9, and z satisfies preferably 0.03 ≤ z ≤ 0.22 and more preferably 0.10 ≤ z ≤ 0.2. In addition, α satisfies preferably 0 ≤ α ≤ 0.05 and is more preferably 0. Furthermore, β satisfies preferably 0 ≤ β ≤ 0.1 and is more preferably 0.

The high Ni content lithium complex oxide 1A preferably has a layered rock-salt type crystal structure. Examples of the lithium complex oxide with such a crystal structure include lithium-nickel-cobalt-manganese complex oxides, lithium-nickel-cobalt-aluminum complex oxides, and the like. However, the crystal structure of the high Ni content lithium complex oxide 1A may be a spinel structure or the like. Note that the crystal structure can be checked by an X-ray diffraction method or the like.

From the viewpoint of improving the battery characteristic (for example, energy density or output characteristic), the average particle diameter (D50) of the high Ni content lithium complex oxide 1A may be generally 25 µm or less, and in one embodiment is 0.05 to 25 µm, preferably 1 to 23 µm, and for example 10 to 20 µm. Note that, in the present specification, the term "average particle diameter (D50)" refers to the median diameter (D50), which means the particle diameter corresponding to the cumulative frequency 50 vol% from the microparticle side with small particle diameter in the particle size distribution based on the volume in accordance with a laser diffraction/scattering method.

The high Ni content lithium complex oxide 1A here is in a form of a secondary particle in which a plurality of primary particles 1p are aggregated with a physical or chemical bonding power. The high Ni content lithium complex oxide 1A (that is, secondary particle) is a group of the primary particles 1p in which a number of primary particles 1p are gathered to form one particle. Note that, in the present specification, the term "primary particle" refers to the minimum unit of particles forming the high Ni content lithium complex oxide 1A and specifically, the minimum unit determined based on the apparent geometric mode. The number of primary particles 1p forming one secondary particle is typically 10 or more, and for example 20 or more. The number of primary particles 1p in one secondary particle can be checked by observation of the secondary particle at a magnification of 10,000 to 30,000 using an electron microscope (for example, scanning electron microscope). However, as will be described in another embodiment below, the high Ni content lithium complex oxide 1A may be in a form of a single particle.

Inside the secondary particle of the high Ni content lithium complex oxide 1A, the primary particles 1p are disposed relatively densely compared to the second high Ni content lithium complex oxide 2A to be described below. In other words, inside the secondary particle of the high Ni content lithium complex oxide 1A, the spaces derived from gaps between the aggregated primary particles 1p are fewer than those in the second high Ni content lithium complex oxide 2A to be described below. In the present embodiment, the high Ni content lithium complex oxide 1A has a porosity of less than 2%. The porosity may be 1% or less. When the porosity is a predetermined value or less, the energy density can be improved. The porosity of the first positive electrode active material 1 can be adjusted by, for example, changing a generation condition (specifically, ammonium ion concentration in a reaction solution) when generating a hydroxide, which is a precursor, by a conventionally known crystallization method.

Note that the porosity of the secondary particle can be obtained as below. That is to say, first, a sample for cross-sectional observation of the high Ni content lithium complex oxide 2Ais manufactured by a cross-section polishing process or the like. Next, the sample for the cross-sectional observation is observed using an electron microscope (for example, scanning electron microscope), and thus, a cross-sectional observation image is acquired. From the obtained cross-sectional observation image, the primary particles 1p and the spaces are binarized and the area of the entire secondary particle and the area of all the spaces in the secondary particle are obtained using image analysis software (for example, "ImageJ"). Then, the porosity (%) can be obtained from the following expression: (the area of the entire spaces/the area of the entire secondary particle) × 100.

The positive electrode upper layer 54B includes at least a second positive electrode active material 2 (see FIG. 3B). FIG. 3B is a cross-sectional view schematically illustrating the second positive electrode active material 2 according to an embodiment. The second positive electrode active material 2 contains the second high Ni content lithium complex oxide 2A (hereinafter, also referred to as "high Ni content lithium complex oxide 2A" simply), which is a base material, and a covering element 4 attached to the second high Ni content lithium complex oxide 2A. The second high Ni content lithium complex oxide 2A is one example of lithium complex oxides containing 70 mol% or more of Ni disclosed herein. The covering element 4 is attached to the second high Ni content lithium complex oxide 2A by physical and/or chemical bonding typically. The covering element 4 may be contained as a compound (for example, oxide or Li compound). Note that FIG. 3B illustrates one example and the second positive electrode active material 2 is not limited to the illustrated example.

The shape, kind, crystal structure, and average particle diameter (D50) of the second high Ni content lithium complex oxide 2A may be similar to the shape, kind, crystal structure, and average particle diameter (D50) of the first high Ni content lithium complex oxide 1A described above. For example, the high Ni content lithium complex oxide 2A may have either a substantially spherical shape or an irregular shape or the like. In addition, the high Ni content lithium complex oxide 2A may be the same kind (chemical composition) as the first high Ni content lithium complex oxide 1A. From the viewpoint of improving the battery characteristic, the high Ni content lithium complex oxide 2Ais preferably a lithium-nickel-cobalt-manganese complex oxide. In particular, the composition expressed by the aforementioned Formula (I) is preferable. The high Ni content lithium complex oxide 2A preferably has a layered rock-salt type crystal structure.

The high Ni content lithium complex oxide 2A is in a form of a secondary particle in which a plurality of primary particles 2p are aggregated with a physical or chemical bonding power, in a manner similar to the first high Ni content lithium complex oxide 1A. The number of primary particles 2p forming one secondary particle is typically 10 or more, and for example 20 or more. The high Ni content lithium complex oxide 2A has a porous structure, and inside the secondary particle, the spaces S derived from the gaps between the aggregated primary particles 2p exist. The space S may or may not be open. The space S is a space that exists within a virtual outer line OL of the secondary particle in a cross-sectional view and that is typically surrounded by the primary particles 2p.

In the present embodiment, the porosity of the high Ni content lithium complex oxide 2A (secondary particle) is 2 to 20%. The porosity of the secondary particle may be, for example, 3% or more, 5% or more, and 10% or more. When the porosity is a predetermined value or more, the initial resistance can be reduced. In addition, the suitable space S can be secured inside the secondary particle of the high Ni content lithium complex oxide 2A, and for example, the covering element 4 can be spread uniformly to a central part of the secondary particle. As a result, even when the secondary particle is cracked due to the pressing, the side reaction with the nonaqueous electrolyte can be suppressed and the quantity of gas to be generated under high voltage can be reduced. The porosity of the secondary particle may be 18% or less and 15% or less. When the porosity is a predetermined value or less, the energy density can be improved. In addition, the secondary particle is cracked less easily and the particle shape can be maintained stably. Additionally, the surface area to react with the nonaqueous electrolyte can be reduced. Note that the porosity of the second positive electrode active material 2 can be adjusted by, for example, changing a generation condition (specifically, ammonium ion concentration in the reaction solution) when generating a hydroxide, which is a precursor, by the conventionally known crystallization method.

The average primary particle diameter of the primary particles 2p may be, for example, 0.05 to 5 µm. From the viewpoint of suitably increasing the mechanical strength of the secondary particle and the battery characteristic (for example, cycle characteristic or output characteristic), the average primary particle diameter is preferably 1 µm or more and more preferably 1.5 µm or more. When the average primary particle diameter is a predetermined value or more, the reaction with the nonaqueous electrolyte can be suppressed more suitably. In addition, the average primary particle diameter is preferably 3 µm or less and more preferably 2 µm or less. When the average primary particle diameter is a predetermined value or less, the crack does not easily occur in the secondary particle even after repeated charging and discharging.

Note that, in the present specification, the term "average primary particle diameter" refers to the average value of major axes of the primary particles 2p (for example, 10 or more primary particles 2p) that are grasped from the cross-sectional observation image and selected optionally. The average primary particle diameter can be obtained in a manner that, for example, the major axis of each of the primary particles 2p selected optionally from the cross-sectional observation image is obtained using image analysis type particle size distribution measurement software (for example, "Mac-View") and the average value thereof is calculated.

In the present embodiment, in the cross-sectional observation image in which the secondary particle is observed with an electron microscope (for example, scanning electron microscope), the space S larger than the average cross-sectional area of the primary particles 2p does not exist inside the secondary particle. Thus, compared to when the aforementioned condition is not satisfied, the small spaces S can be secured suitably inside the secondary particle, and for example, the covering element 4 can be spread uniformly to the central part of the secondary particle. As a result, the reaction with the nonaqueous electrolyte can be suppressed suitably and a film is not easily formed on a surface of the primary particle 2p even after repeated charging and discharging. The magnitude relation between the average cross-sectional area of the primary particles 2p and the space S can be adjusted by, for example, changing a sintering condition (specifically, sintering temperature and sintering time) when sintering a mixture of a hydroxide, which is the precursor, and a compound to serve as a lithium source.

Note that the absence of the space S larger than the average cross-sectional area of the primary particles 2p inside the secondary particle can be checked as follows. That is to say, first, in the cross-sectional observation image, the primary particles 2p and the spaces S are binarized using image analysis software and the average cross-sectional area of the primary particles 2p (for example, 10 or more primary particles 2p) is obtained. In addition, the cross-sectional area of the largest space S among the spaces S (that is, regions closed by being surrounded by the primary particles 2p) is obtained. Then, when the cross-sectional area of the largest space S (largest space area) and the average cross-sectional area of the primary particles 2p (average primary particle area) satisfy the following relation: (largest space area/average primary particle area) ≤ 1.0, the aforementioned absence of the space S can be confirmed.

The covering element 4 includes at least one kind of element among elements that belong to Group 6 (chromium group) or Group 13. Specific examples include chromium (Cr), molybdenum (Mo), tungsten (W), boron (B), aluminum (Al), gallium (Ga), indium (In), and thallium (Tl). In particular, from the viewpoints of cost and availability, tungsten (W), boron (B), aluminum (Al), chromium (Cr), or the like is preferable, and boron (B) is particularly preferable because the effect of the art disclosed herein can be obtained at a higher level.

When the total of the metal elements in the high Ni content lithium complex oxide 2A is 100 mol%, the covering element 4 is contained by 0.5 to 3 mol%. The ratio of the covering element 4 may be, for example, 1.0 mol% or more and 1.5 mol% or more. When the ratio of the covering element 4 is a predetermined value or more, the covering element 4 can be spread uniformly in the high Ni content lithium complex oxide 2A. As a result, even when the secondary particle is cracked due to the pressing, the side reaction with the nonaqueous electrolyte can be suppressed and the quantity of gas to be generated under high voltage can be reduced. The ratio of the covering element 4 may be, for example, 2.5 mol% or less and 2.0 mol% or less. When the ratio of the covering element 4 is a predetermined value or less, the internal resistance can be reduced and the battery characteristic (for example, cycle characteristic or output characteristic) can be improved. Note that the ratio of the covering element 4 in the second positive electrode active material 2 can be obtained by inductively coupled plasma (ICP) analysis.

The covering element 4 is preferably attached to at least an outer surface of the second positive electrode active material 2, specifically a surface of the secondary particle of the high Ni content lithium complex oxide 2A. Here, the coverage of the second positive electrode active material 2 with the covering element 4 may be 50% or more. Note that the attachment of the covering element 4 on the surface of the secondary particle and the ratio (coverage) of the part that is covered with the covering element 4 can be checked by, for example, X-ray photoelectron spectroscopy (XPS) analysis performed on the second positive electrode active material 2.

The covering element 4 preferably exists inside the secondary particle in addition to or instead of on the surface of the secondary particle. Specifically, the covering element 4 preferably exists on the surface of the primary particle 2p inside the secondary particle. The quantity of the covering element 4 inside the secondary particle may be either larger or smaller than the quantity of the covering element 4 on the surface of the secondary particle. Thus, the effect of the art disclosed herein can be obtained at a higher level. The presence of the covering element 4 inside the secondary particle can be checked by laser ablation inductively coupled plasma mass spectrometry (LA-ICP-MS) analysis.

The ratio of the thickness of the positive electrode lower layer 54A to the total thickness of the positive electrode active material layer 54 may be generally 0.3 or more and preferably 0.5 or more. Thus, the energy density can be improved further. The ratio of the thickness of the positive electrode lower layer 54A may be generally 0.8 or less and preferably 0.9 or less. The ratio of the thickness of the positive electrode upper layer 54B to the total thickness of the positive electrode active material layer 54 may be generally 0.1 or more and preferably 0.2 or more. Thus, the generation of gas under high voltage can be suppressed more suitably. The ratio of the thickness of the positive electrode upper layer 54B may be generally 0.7 or less and preferably 0.5 or less.

The positive electrode lower layer 54A may include the positive electrode active material other than the first positive electrode active material 1 within the range not interrupting the effect of the art disclosed herein. Similarly, the positive electrode upper layer 54B may include the positive electrode active material other than the second positive electrode active material 2 within the range not interrupting the effect of the art disclosed herein. When the entire positive electrode active material in the positive electrode lower layer 54A (or positive electrode upper layer 54B) is 100 mass%, the ratio of the first positive electrode active material 1 (or second positive electrode active material 2) may be generally 50 mass% or more, preferably 60 mass% or more, more preferably 80 mass% or more, and for example 85 to 100 mass%. Thus, the effect of the art disclosed herein can be obtained at the high level.

The positive electrode lower layer 54A and/or the positive electrode upper layer 54B may additionally include an additive component other than the positive electrode active material. Examples of the additive component include a conductive material, a binder, trilithium phosphate, and the like. Examples of the conductive material include carbon black such as acetylene black (AB) and carbon materials such as graphite. Examples of the binder include fluorine resins such as polyvinylidene fluoride (PVDF).

When the entire positive electrode active material layer 54 is 100 mass%, the ratio of the positive electrode active material (for example, the total ratio of the first positive electrode active material 1 and the second positive electrode active material 2) is preferably 70 mass% or more, more preferably 80 to 99 mass%, and still more preferably 85 to 98 mass%, without particular limitations. The ratio of the conductive material is preferably 0.5 to 15 mass%, for example 1 to 10 mass%, and more preferably 1 to 5 mass%. The ratio of the binder is preferably 0.5 to 15 mass%, for example 0.8 to 10 mass%, and more preferably 1 to 5 mass%.

The density of the positive electrode active material layer 54 is preferably 3.0 g/cm³ or more, more preferably 3.2 g/cm³ or more, still more preferably 3.4 g/cm³ or more, and particularly preferably 3.5 to 4.0 g/cm³ from the viewpoint of increasing the volume energy density. When the density of the positive electrode active material layer 54 is increased, the positive electrode active material is easily cracked due to the pressing on the front surface side (upper layer) of the positive electrode active material layer 54. Therefore, it is particularly effective to apply the art disclosed herein.

### [Manufacturing method for positive electrode active material]

Although not particularly limited, the first positive electrode active material 1 (high Ni content lithium complex oxide 1A) as described above can be manufactured suitably by the conventionally known crystallization method, for example. In the crystallization method, when the hydroxide, which is the precursor of the high Ni content lithium complex oxide 1A, is generated, a compound including an ammonium ion (for example, ammonia) is used as an alkaline compound, and the ammonium ion concentration in the reaction solution may be generally more than 15 g/L and for example 16 to 25 g/L. Thus, the high Ni content lithium complex oxide 1A can have a porosity of less than 2%.

On the other hand, the second positive electrode active material 2 can be manufactured suitably by manufacturing the high Ni content lithium complex oxide 2A, which serves as the base material in the conventionally known crystallization method, for example, and then introducing the covering element 4 to the high Ni content lithium complex oxide 2A. In the crystallization method, when the hydroxide, which is the precursor of the high Ni content lithium complex oxide 2A, is generated, a compound including an ammonium ion (for example, ammonia) is used as the alkaline compound, and the ammonium ion concentration in the reaction solution may be generally 15 g/L or less and for example 2 to 15 g/L. Thus, the high Ni content lithium complex oxide 2A can have a porosity of 2 to 20%.

The covering element 4 can be introduced by a conventionally known method (for example, dry mixing method or wet mixing method). In one embodiment, the high Ni content lithium complex oxide 2A and a boron source are mixed in a dry procedure in accordance with the above mixing ratio, and the mixture is subjected to a heat treatment. The heat treatment temperature here is generally 300 to 500°C, the heat treatment time is generally 1 to 10 hours, and the temperature rising speed is generally 5 to 40 °C/min; thus, the high Ni content lithium complex oxide 2A without the space larger than the average cross-sectional area of the primary particles inside the secondary particle can be manufactured suitably.

### [Other embodiment]

The first positive electrode active material 1 (high Ni content lithium complex oxide 1A) described above is in the form of the secondary particle as illustrated in FIG. 3A; however, the high Ni content lithium complex oxide may be a single particle. Note that, in the present specification, the term "single particle" refers to a particle generated by the growth of a single crystal nucleus, and a particle of a single-crystal body without a crystal grain boundary accordingly. It can be confirmed that the particle is the single-crystal body by, for example, analyzing an electron beam diffraction image with an electron microscope (for example, scanning electron microscope). One single particle is formed of typically less than ten, and for example one to five primary particles. The single particle can be manufactured suitably by a conventionally known molten salt method, for example.

### [Application of nonaqueous electrolyte secondary battery]

The nonaqueous electrolyte secondary battery 100 is usable in various applications, and for example, can be suitably used as a motive power source for a motor (power source for driving) that is mounted in a vehicle such as a passenger car or a truck because of having the high energy density and the like. The vehicle is not limited to a particular type, and may be, for example, a plug-in hybrid electric vehicle (PHEV), a hybrid electric vehicle (HEV), or a battery electric vehicle (BEV).

Examples of the present disclosure are hereinafter described but these examples are not intended to limit the present disclosure to the examples below.

### [Test Example I]

### <Example 1>

First, the first positive electrode active material was prepared. Specifically, when the hydroxide, which is the precursor, was generated by the crystallization method, the compound including an ammonium ion was used as the alkaline compound, and the ammonium ion concentration in the reaction solution was 20 g/L; thus, a high Ni content lithium complex oxide (LiNi_{0.8}Co_{0.1}Mn_{0.1}O₂) in the form of the secondary particle with a porosity of 1% was prepared.

Then, this positive electrode active material, carbon black as the conductive material, and polyvinylidene fluoride (PVDF) as the binder were mixed in a mass ratio of positive electrode active material:AB:PVDF = 97.5:1.5:1.0, and a suitable amount of N-methyl-2-pyrrolidone (NMP) was added to the obtained mixture; thus, a slurry for positive electrode lower layer formation was prepared.

In addition, the second positive electrode active material was prepared. Specifically, when the hydroxide, which is the precursor, was generated by the crystallization method, the compound including an ammonium ion was used as the alkaline compound, and the ammonium ion concentration in the reaction solution was 15 g/L and the hydroxide and a lithium source were mixed and sintered at a sintering temperature of 800°C for 10 hours; thus, a high Ni content lithium complex oxide (LiNi_{0.8}Co_{0.1}Mn_{0.1}O₂) in the form of the secondary particle with a porosity of 2% was prepared. This high Ni content lithium complex oxide was mixed with a covering element source including the covering element (here, borate including boron) in a dry procedure and this mixture was subjected to a heat treatment at 300°C for 3 hours, so that boron was introduced into the space of the secondary particle of the high Ni content lithium complex oxide and thus, the second positive electrode active material was prepared.

This positive electrode active material, carbon black as the conductive material, and polyvinylidene fluoride (PVDF) as the binder were mixed in a mass ratio of positive electrode active material:AB:PVDF = 97.5:1.5:1.0, and a suitable amount of N-methyl-2-pyrrolidone (NMP) was added to the obtained mixture; thus, a slurry for positive electrode upper layer formation was prepared.

Next, the slurry for the positive electrode lower layer formation was applied on both surfaces of an aluminum foil (positive electrode current collector) and dried. Next, the slurry for the positive electrode upper layer formation was applied and dried on the film formed by the slurry for the positive electrode lower layer formation. After that, the film formed by the application was rolled by a roller so that the positive electrode active material layer had a density of 3.6 g/cm³. Thus, the positive electrode in which the positive electrode active material layer with a two-layer structure was disposed on each of both surfaces of the positive electrode current collector was manufactured. Note that the ratio of the application thickness after the rolling between the positive electrode lower layer and the positive electrode upper layer was positive electrode lower layer:positive electrode upper layer = 4:1. That is to say, (thickness of positive electrode upper layer/thickness of entire positive electrode active material layer) = 0.2.

In addition, graphite (C) as the negative electrode active material, styrene butadiene rubber (SBR) as the binder, and carboxyl methyl cellulose (CMC) as the thickener were mixed in a mass ratio of C:SBR:CMC = 98:1:1 in an ion exchanged water, and thus a slurry for negative electrode active material layer formation was prepared. This slurry for the negative electrode active material layer formation was applied on both surfaces of a copper foil (negative electrode current collector) and dried; thus, the negative electrode active material layer was formed. Subsequently, the negative electrode active material layer was rolled by the roller and thus, the negative electrode sheet was manufactured.

As the separator, a porous polyolefin sheet with a three-layer structure of PP/PE/PP was prepared. Next, the positive electrode sheet and the negative electrode sheet were overlapped on each other with the separator therebetween; thus, the electrode body was manufactured. Next, an electrode terminal was attached to the electrode body, this was inserted into the battery case, and the nonaqueous electrolyte was injected. Note that, as the nonaqueous electrolyte, a nonaqueous electrolyte in which LiPF₆ as the supporting salt was dissolved at a concentration of 1 mol/L in a mixed solvent including ethylene carbonate (EC) and ethyl methyl carbonate (EMC) in a volume ratio of EC:EMC = 30:70 was used. After that, the battery case was sealed; thus, a lithium ion secondary battery for evaluation according to Example 1 was obtained.

### <Examples 2 to 6 and Comparative Examples 1 to 3>

In each of Examples 2 to 4 and Comparative Example 1, a lithium ion secondary battery for evaluation was manufactured by a method similar to that in Example 1 except that a high Ni content lithium complex oxide having the porosity shown in Table 1 and containing the covering element (boron) at a ratio shown in Table 1 was used as the second positive electrode active material of the positive electrode upper layer. Note that the porosity of the high Ni content lithium complex oxide was adjusted by changing the generation condition for the hydroxide to serve as the precursor.

In Comparative Example 2, a lithium ion secondary battery for evaluation was manufactured by a method similar to that in Example 1 except that a high Ni content lithium complex oxide with the conventionally known hollow shape (that is, the shape including a shell part formed of the secondary particle where the primary particles were fused, and a hollow part formed inside the shell part) was used. In Comparative Example 3, a lithium ion secondary battery for evaluation was manufactured by a method similar to that in Example 1 except that a high Ni content lithium complex oxide with a porosity of 10% was used as the first positive electrode active material of the positive electrode lower layer.

In Examples 5 and 6, a lithium ion secondary battery for evaluation was manufactured by a method similar to that in Example 1 except that a high Ni content lithium complex oxide containing the compound shown in Table 1 instead of borate as the covering element source was used.

### <Evaluation 1 of positive electrode active material>

Whether the covering element (specifically, B (boron) in Examples 1 to 4 and Comparative Examples 1 to 3, Al (aluminum) in Example 5, and W (tungsten) in Example 6) entered the secondary particle was checked by LA-ICP-MS analysis. Note that the measurement resolution was 4 µm and since S/N was low, the measurement was performed at arbitrary ten points for determination. The results are shown in Table 1. Table 1 shows "detected" when the covering element was confirmed inside (here, at a central part of) the secondary particle and "not detected" when the covering element was not confirmed.

### <Evaluation 2 of positive electrode active material>

By the aforementioned method, a sample for the cross-sectional observation of the second positive electrode active material was manufactured and a cross-sectional observation image was acquired using a scanning electron microscope. Then, a binarizing process was performed using image analysis software; for example, a part with the primary particles was made white and a space part without the primary particles was made black. Next, the average cross-sectional area of ten arbitrary primary particles and the cross-sectional areas of the spaces S were obtained. Then, the ratio of the cross-sectional area of the largest space S (largest space area) to the average cross-sectional area of the primary particles (average primary particle area), that is, (largest space area)/(average primary particle area) was calculated. The results are shown in Table 1.

### <Evaluation of gas generation quantity at preservation under high voltage>

First, the volume of each lithium ion secondary battery for evaluation in an initial stage was obtained in accordance with the Archimedes method using Fluorinert as a solvent. This volume was used as the initial volume. Next, each lithium ion secondary battery for evaluation was charged up to 4.3 V (high voltage) under the 25-°C environment and preserved for five days under the 45-°C environment. After that, the volume of each lithium ion secondary battery for evaluation that was preserved under high voltage was obtained in accordance with the Archimedes method using Fluorinert as a solvent. Then, the difference (mL) between the initial volume and the volume after the preservation under high voltage was obtained and this was used as the gas quantity after the preservation under high voltage. The results are shown in Table 1.

### <Evaluation of energy density>

Each lithium ion secondary battery for evaluation was charged with constant current to 4.18 V with a current density of 0.2 mA/cm², and then charged with constant voltage until the current density became 0.04 mA/cm². Next, the lithium ion secondary battery for evaluation was discharged with constant current to 3.48 V with a current density of 0.2 mA/cm². Then, from the discharge curve at this time, the volume energy density was calculated. The results are shown in Table 1.

**[Table 1]**

| | Second positive electrode active material of positive electrode upper layer | | | | | First positive electrod e active material of positive electrod e lower layer | Gas quantity after preservatio n under high voltage (mL) | Energy density (Wh/L ) |
|---|---|---|---|---|---|---|---|---|
| | Porosit y (%) | Covering element source | Amount of coverin g element (mol%) | Detection of covering element inside secondar y particle | Largest space area/averag e primary particle area | Porosity (%) | | |
| Example 1 | 2 | Borate | 0.5 | Detected | 1.0 or less | 1 | 2.9 | 650 |
| Example 2 | 10 | Borate | 0.5 | Detected | 1.0 or less | 1 | 2.5 | 640 |
| Example 3 | 10 | Borate | 3 | Detected | 1.0 or less | 1 | 2.3 | 640 |
| Example 4 | 20 | Borate | 0.5 | Detected | 1.0 or less | 1 | 2.9 | 625 |
| Comparativ e Example 1 | 0.5 | Borate | 0.5 | Not detected | 1.0 or less | 1 | 4.3 | 650 |
| Comparativ e Example 2 | 10 | Borate | 0.5 | Detected * | Over 1.0 | 1 | 4.1 | 640 |
| Comparativ e Example 3 | 10 | Borate | 0.5 | Detected | 1.0 or less | 10 | 2.5 | 585 |
| Example 5 | 10 | Aluminu m oxide | 0.5 | Detected | 1.0 or less | 1 | 3.4 | 640 |
| Example 6 | 10 | Tungsten oxide | 0.5 | Detected | 1.0 or less | 1 | 3.5 | 640 |

| | | | | | | | | |
|---|---|---|---|---|---|---|---|---|
| *Less than in Example 2 | | | | | | | | |

The results in Table 1 indicate that, in Comparative Example 1 in which the porosity of the secondary particle was 0.5% and Comparative Example 2 in which the high Ni content lithium complex oxide with the hollow shape was used, a large quantity of gas was generated under high voltage. It is considered that this is because the porosity of the secondary particle was too low and the entry of the additive into the secondary particle was therefore small in Comparative Example 1. In Comparative Example 2, it is considered that since the particle has a hollow shape, larger spaces exist unevenly inside the secondary particle, so that the entry of the covering element into the secondary particle was small. In Comparative Example 3 in which the first positive electrode active material of the positive electrode lower layer had a porosity of 10%, the energy density was the lowest.

In contrast to these comparative examples, in Examples 1 to 3 in which, in the multilayer structure in which the positive electrode active material layer includes the positive electrode lower layer and the positive electrode upper layer, the positive electrode lower layer includes the first positive electrode active material including the high Ni content lithium complex oxide with a porosity of less than 2% and the positive electrode upper layer incudes the high Ni content lithium complex oxide in the form of the secondary particle in which the primary particles are aggregated, and the covering element, the porosity of the secondary particle is 2 to 20%, the larger space than the average cross-sectional area of the primary particles does not exist inside the secondary particle, and the ratio of the covering element is 0.5 to 3 mol% when the total of the metal elements in the high Ni content lithium complex oxide is 100 mol%, both the high energy density and the suppression of the gas generation under high voltage can be achieved at the high level. These results indicate the technical meaning of the present disclosure.

The comparison between Example 2 and Examples 5 and 6 shows that the gas generation quantity under high voltage was suppressed more suitably when the covering element was boron. It is considered that this is due to the difference in presence state. That is to say, boron is dissolved in the heat treatment to adhere to the surface of the secondary particle as a whole; on the other hand, aluminum or tungsten forms a Li compound to adhere to the surface of the secondary particle unevenly.

### [Test Example II]

In addition, the ratio of the application thickness between the positive electrode lower layer and the positive electrode upper layer was examined. Specifically, a lithium ion secondary battery for evaluation was manufactured by a method similar to that in Example 2 except that (thickness of positive electrode upper layer/thickness of entire positive electrode active material layer) = 0.1 to 0.8, and then was subjected to various evaluations. The results are shown in Table 2.

### [Table 2]

**Table 2**

| | Thickness of positive electrode upper layer/thickness of entire positive electrode active material layer | Gas quantity after preservation under high voltage (mL) | Energy density (Wh/L) |
|---|---|---|---|
| Example 7 | 0.1 | 3.6 | 645 |
| Example 2 | 0.2 | 2.5 | 640 |
| Example 8 | 0.5 | 2.4 | 620 |
| Example 9 | 0.8 | 2.2 | 595 |

The results in Table 2 indicate that setting (thickness of positive electrode upper layer/thickness of entire positive electrode active material layer) = 0.1 to 0.5 can achieve both the higher energy density and the suppression of gas generation under high voltage at the higher level.

As described above, the following items are given as specific aspects of the art disclosed herein.
Item 1: A nonaqueous electrolyte secondary battery including a positive electrode, a negative electrode, and a nonaqueous electrolyte, in which the positive electrode includes a positive electrode current collector and a positive electrode active material layer supported by the positive electrode current collector, the positive electrode active material layer has a multilayer structure including a positive electrode lower layer, and a positive electrode upper layer disposed at a position farther from the positive electrode current collector than the positive electrode lower layer, the positive electrode lower layer includes a first positive electrode active material including a first high Ni content lithium complex oxide containing 70 mol% or more of nickel relative to metal elements other than lithium, the first high Ni content lithium complex oxide has a porosity of less than 2%, the positive electrode upper layer includes a second positive electrode active material including a second high Ni content lithium complex oxide containing 70 mol% or more of nickel relative to metal elements other than lithium, and a covering element including at least one kind of element among elements that belong to Group 6 or Group 13 and attached to the second high Ni content lithium complex oxide, the second high Ni content lithium complex oxide is in a form of a secondary particle in which primary particles are aggregated, the second high Ni content lithium complex oxide has a porosity of 2% or more and 20% or less, in the second high Ni content lithium complex oxide, a larger space than an average cross-sectional area of the primary particles does not exist inside the secondary particle in a cross-sectional observation image observed with an electron microscope, and the covering element is contained by 0.5 mol% or more and 3 mol% or less when a total of metal elements of the second high Ni content lithium complex oxide is 100 mol%.
Item 2: The nonaqueous electrolyte secondary battery according to Item 1, in which the covering element is boron.
Item 3: The nonaqueous electrolyte secondary battery according to Item 1 or Item 2, in which the covering element exists on a surface of the primary particle inside the secondary particle.
Item 4: The nonaqueous electrolyte secondary battery according to any one of Item 1 to Item 3, in which a ratio of a thickness of the positive electrode upper layer to an entire thickness of the positive electrode active material layer is 0.1 or more and 0.5 or less.
Item 5: The nonaqueous electrolyte secondary battery according to any one of Item 1 to Item 4, in which at least one of the first high Ni content lithium complex oxide and the second high Ni content lithium complex oxide is a lithium-nickel-cobalt-manganese complex oxide.

The specific examples of the present disclosure have been described above in detail; however, these are examples and will not limit the scope of claims.

### [Reference Signs List]

1 First positive electrode active material
1A First high Ni content lithium complex oxide
1p Primary particle
2 Second positive electrode active material
2A Second high Ni content lithium complex oxide
2p Primary particle
4 Covering element
20 Electrode body
50 Positive electrode sheet (positive electrode)
54 Positive electrode active material layer
54A Positive electrode lower layer
54B Positive electrode upper layer
60 Negative electrode sheet (negative electrode)
64 Negative electrode active material layer
70 Separator sheet (separator)
100 Nonaqueous electrolyte secondary battery

## Claims

1. A nonaqueous electrolyte secondary battery (100) comprising
a positive electrode (50), a negative electrode (60), and a nonaqueous electrolyte, wherein
the positive electrode (50) includes a positive electrode current collector (52) and a positive electrode active material layer (54) supported by the positive electrode current collector (52),
the positive electrode active material layer (54) has a multilayer structure including a positive electrode lower layer (54A), and a positive electrode upper layer (54B) disposed at a position farther from the positive electrode current collector (52) than the positive electrode lower layer (54A),
the positive electrode lower layer (54A) includes a first positive electrode active material (1) including a first Ni content lithium complex oxide 1A containing 70 mol% or more of nickel relative to metal elements other than lithium,
the first Ni content lithium complex oxide (1A) has a porosity of less than 2%,
the positive electrode upper layer (54B) includes a second positive electrode active material (2) including a second Ni content lithium complex oxide (2A) containing 70 mol% or more of nickel relative to metal elements other than lithium, and a covering element (4) including at least one kind of element among elements that belong to Group 6 or Group 13 and attached to the second Ni content lithium complex oxide (2A),
the second Ni content lithium complex oxide (2A) is a secondary particle in which primary particles (2p) are aggregated,
the second Ni content lithium complex oxide (2A) has a porosity of 2% or more and 20% or less,
in the second Ni content lithium complex oxide (2A), a larger space than an average cross-sectional area of the primary particles (2p) does not exist inside the secondary particle in a cross-sectional observation image observed with an electron microscope, and
the covering element (4) is contained by 0.5 mol% or more and 3 mol% or less when a total of metal elements of the second Ni content lithium complex oxide (2A) is 100 mol %, wherein the porosity is measured according to the description.

2. The nonaqueous electrolyte secondary battery (100) according to claim 1, wherein the covering element (4) is boron.

3. The nonaqueous electrolyte secondary battery (100) according to claim 1 or 2,
wherein the covering element (4) exists on a surface of the primary particle (2p) inside the secondary particle.

4. The nonaqueous electrolyte secondary battery (100) according to any one of claims 1 to 3, wherein a ratio of a thickness of the positive electrode upper layer (54B) to an entire thickness of the positive electrode active material layer (54) is 0.1 or more and 0.5 or less.

5. The nonaqueous electrolyte secondary battery (100) according to any one of claims 1 to 4, wherein at least one of the first Ni content lithium complex oxide (1A) and the second Ni content lithium complex oxide (2A) is a lithium-nickel-cobalt-manganese complex oxide.

## Patentansprüche

1. Sekundärbatterie (100) mit nichtwässrigem Elektrolyten, umfassend eine positive Elektrode (50), eine negative Elektrode (60) und einen nichtwässrigen Elektrolyten, wobei
die positive Elektrode (50) einen Positiv-Elektroden-Stromabnehmer (52) und eine Schicht (54) aus aktivem Positiv-Elektrodenmaterial umfasst, die von dem Positiv-Elektroden-Stromabnehmer (52) getragen wird,
die Schicht (54) aus aktivem Positiv-Elektrodenmaterial eine mehrschichtige Struktur aufweist, die eine untere Schicht (54A) der positiven Elektrode und eine obere Schicht (54B) der positiven Elektrode umfasst, die an einer Position angeordnet ist, die weiter von dem Stromkollektor (52) der positiven Elektrode entfernt ist als die untere Schicht (54A) der positiven Elektrode,
die untere Schicht (54A) der positiven Elektrode ein erstes aktives Positiv-Elektrodenmaterial (1) umfasst, das ein erstes Lithiumkomplexoxid (1A) mit Nickelgehalt umfasst, das 70 Mol-% oder mehr Nickel enthält, bezogen auf Metallelemente außer Lithium enthält,
das erste Lithiumkomplexoxid (1A) mit Nickelgehalt eine Porosität von weniger als 2 % aufweist,
die obere Schicht (54B) der positiven Elektrode ein zweites aktives Positiv-Elektrodenmaterial (2), das ein zweites Lithiumkomplexoxid (2A) mit Nickelgehalt enthält, das 70 Mol-% oder mehr Nickel im Verhältnis zu Metallelementen außer Lithium enthält, und ein Abdeckelement (4) umfasst, das mindestens eine Art von Element aus Elementen umfasst, die zur Gruppe 6 oder Gruppe 13 gehören und an das zweite Lithiumkomplexoxid (2A) mit Nickelgehalt gebunden sind,
das zweite Lithiumkomplexoxid (2A) mit Nickelgehalt ein sekundäres Partikel ist, in dem primäre Partikel (2p) aggregiert sind,
das zweite Lithiumkomplexoxid (2A) mit Nickelgehalt eine Porosität von 2 % oder mehr und 20 % oder weniger aufweist,
im zweiten Lithiumkomplexoxid (2A) mit Nickelgehalt ein größerer Raum als eine mittlere Querschnittsfläche der Primärpartikel (2p) innerhalb des Sekundärteilchens in einem mit einem Elektronenmikroskop beobachteten Querschnittsbild nicht existiert, und
das Bedeckungselement (4) zu 0,5 Mol-% oder mehr und 3 Mol-% oder weniger enthalten ist, wenn die Gesamtheit der Metallelemente des zweiten Lithiumkomplexoxids (2A) mit Nickelgehalt 100 Mol-% beträgt, wobei die Porosität nach der Beschreibung gemessen wird.

2. Sekundärbatterie (100) mit nichtwässrigem Elektrolyten nach Anspruch 1, wobei das Abdeckelement (4) Bor ist.

3. Sekundärbatterie (100) mit nichtwässrigem Elektrolyten nach Anspruch 1 oder 2, wobei das Abdeckelement (4) auf einer Oberfläche des primären Partikels (2p) innerhalb des sekundären Partikels vorhanden ist.

4. Sekundärbatterie (100) mit nichtwässrigem Elektrolyten nach einem der Ansprüche 1 bis 3, wobei ein Verhältnis der Dicke der oberen Schicht (54B) der positiven Elektrode zu einer Gesamtdicke der Schicht (54) des aktiven Positiv-Elektrodenmaterials 0,1 oder mehr und 0,5 oder weniger beträgt.

5. Sekundärbatterie (100) mit nichtwässrigem Elektrolyten nach einem der Ansprüche 1 bis 4, wobei mindestens eines von dem ersten Lithiumkomplexoxid (1A) mit Nickelgehalt und dem zweiten Lithiumkomplexoxid (2A) mit Nickelgehalt ein Lithium-Nickel-Kobalt-Mangan-Komplexoxid ist.

## Revendications

1. Batterie secondaire à électrolyte non aqueux (100) comprenant
une électrode positive (50), une électrode négative (60) et un électrolyte non aqueux, dans laquelle
l'électrode positive (50) comprend un collecteur de courant d'électrode positive (52) et une couche de matériau actif d'électrode positive (54) supportée par le collecteur de courant d'électrode positive (52),
la couche de matériau actif de l'électrode positive (54) a une structure multicouche comprenant une couche inférieure d'électrode positive (54A) et une couche supérieure d'électrode positive (54B) disposée à une position plus éloignée du collecteur de courant d'électrode positive (52) que la couche inférieure d'électrode positive (54A),
la couche inférieure de l'électrode positive (54A) comprend un premier matériau actif d'électrode positive (1) comprenant un premier oxyde complexe de lithium à teneur en Ni (1A) contenant 70 mol% ou plus de nickel par rapport aux éléments métalliques autres que le lithium,
le premier oxyde complexe de lithium à teneur en Ni (1A) présente une porosité inférieure à 2 %,
la couche supérieure de l'électrode positive (54B) comprend un second matériau actif d'électrode positive (2) comprenant un second oxyde complexe de lithium à teneur en Ni (2A) contenant 70 mol% ou plus de nickel par rapport aux éléments métalliques autres que le lithium, et un élément de couverture (4) comprenant au moins un type d'élément parmi les éléments appartenant au groupe 6 ou au groupe 13 et fixé au second oxyde complexe de lithium à teneur en Ni (2A),
le deuxième oxyde complexe de lithium à teneur en Ni (2A) est une particule secondaire dans laquelle des particules primaires (2p) sont agrégées,
le deuxième oxyde complexe de lithium à teneur en Ni (2A) a une porosité de 2 % ou plus et de 20 % ou moins,
dans le deuxième oxyde complexe de lithium à teneur en Ni (2A), il n'existe pas d'espace plus grand que la surface moyenne de la section transversale des particules primaires (2p) à l'intérieur de la particule secondaire dans une image d'observation transversale observée à l'aide d'un microscope électronique, et
l'élément de couverture (4) est contenu à raison de 0,5 mol% ou plus et de 3 mol% ou moins lorsque le total des éléments métalliques du deuxième oxyde complexe de lithium à teneur en Ni (2A) est de 100 mol%, la porosité étant mesurée conformément à la description.

2. La batterie secondaire à électrolyte non aqueux (100) selon la revendication 1, dans laquelle l'élément de couverture (4) est du bore.

3. La batterie secondaire à électrolyte non aqueux (100) selon la revendication 1 ou 2, dans laquelle l'élément de couverture (4) existe sur une surface de la particule primaire (2p) à l'intérieur de la particule secondaire.

4. La batterie secondaire à électrolyte non aqueux (100) selon l'une des revendications 1 à 3, dans laquelle un rapport entre l'épaisseur de la couche supérieure de l'électrode positive (54B) et l'épaisseur totale de la couche de matériau actif de l'électrode positive (54) est supérieur ou égal à 0,1 et inférieur ou égal à 0,5.

5. La batterie secondaire à électrolyte non aqueux (100) selon l'une des revendications 1 à 4, dans laquelle au moins l'un du premier oxyde complexe de lithium à teneur en Ni (1A) et du second oxyde complexe de lithium à teneur en Ni (2A) est un oxyde complexe de lithium-nickel-cobalt-manganèse.
